# EUROPÄISCHE PATENTSCHRIFT

(11) **EP 3 551 898 B1**
(45) Veröffentlichungstag und Bekanntmachung des Hinweises auf die Patenterteilung: **25.03.2020**
(21) Anmeldenummer: 17797141.3
(22) Anmeldetag: 08.11.2017
(51) Int. Cl.: B60R 17/00, F16H 57/04, F16N 31/00

(54) **SCHAFTANORDNUNG MIT FLUIDSTAURING**
SHAFT ASSEMBLY HAVING A FLUID-DAMMING RING
SYSTÈME D'ARBRE MUNI D'UNE BAGUE DE RETENUE DE FLUIDE

(30) Priorität: 06.12.2016 DE 102016123551
(43) Veröffentlichungstag der Anmeldung: 16.10.2019
(73) Patentinhaber: Magna PT B.V. & Co. KG, 74199 Untergruppenbach (DE)
(72) Erfinder: NICKLASS, Oliver, 76709 Kronau (DE)
(74) Vertreter: Rausch, Gabriele
(86) Internationale Anmeldenummer: PCT/EP2017/078661
(87) Internationale Veröffentlichungsnummer: WO 2018/103987

(56) Entgegenhaltungen:
- DE-B3-102012 214 060
- DE-U1- 20 317 093

## Beschreibung

Die vorliegende Erfindung betrifft eine Schaftanordnung für ein Kraftfahrzeuggetriebe, mit einem Hohlschaft und mit einem in Bezug auf den Hohlschaft gelagerten Bauteil, wobei der Hohlschaft eine Zentralbohrung aufweist, die dazu ausgebildet ist, ein Fluid aufzunehmen, um dieses dem Bauteil zuzuführen, und wobei in der Zentralbohrung ein Fluidstauring angeordnet ist, der einen Fluidfluss entlang der Zentralbohrung zumindest teilweise begrenzt.

Die Schaftanordnung kann bspw. als Wellenanordnung ausgebildet sein, wobei der Hohlschaft eine Hohlwelle ist und wobei das Bauteil bspw. ein am Außenumfang der Hohlwelle drehbar gelagertes Bauteil wie ein Losrad ist. In diesem Fall ist in der Hohlwelle in der Regel eine von der Zentralbohrung ausgehende Querbohrung vorgesehen, die die Zentralbohrung mit dem Bauteil verbindet.

Insbesondere verbindet die Querbohrung in diesem Fall die Zentralbohrung mit einem Lager für das Bauteil, wobei das Lager bspw. als Nadellager ausgebildet ist, das über die Zentralbohrung und die Querbohrung zu schmieren ist.

In diesem Fall ist der Fluidstauring in der Zentralbohrung dazu ausgebildet, ein Zurückfließen des Fluides in die Richtung des Zuführens zumindest teilweise zu verhindern.

Andererseits kann der Hohlschaft bspw. auch als Gehäuseschaft ausgebildet sein, an dessen Innenumfang ein Lager zum Lagern einer Welle angeordnet ist. Die Welle kann in diesem Fall gegenüber dem Hohlschaft durch eine Wellendichtung abgedichtet sein.

Die Wellendichtung ist dabei auf einer axialen Seite des Wellenlagers angeordnet.

Auf der gegenüberliegenden axialen Seite des Wellenlagers ist dabei vorzugsweise ein Fluidstauring angeordnet, der ein Zurückströmen von Fluid aus dem Bereich zwischen der Wellendichtung und dem Fluidstauring zumindest teilweise verhindert.

Generell dienen Fluidstauringe in derartigen Schaftanordnungen zum Anstauen von Fluid.

Die Fluidstauringe können als radial elastische Ringe ausgebildet sein, die in der Zentralbohrung ohne weitere Befestigungselemente festgelegt werden.

Aus dem Dokument DE 10 2012 214 060 B3 ist ein Ölstauring zum Anstauen von Öl in einem Lager bekannt, mit einem Haltering in Form eines Innen-Seeger-Rings, und mit einem an einen Innenumfang des Halterings angesetzten Staukörper, umfassend eine äußere Stauwand und eine innere Stauwand, die entlang einer als Sollbruchstelle dienenden Nut mit der äußeren Stauwand verbunden ist.

Der Staukörper kann im Wesentlichen eine Kreissegmentform haben. Die innere Stauwand kann bedarfsweise über die Sollbruchstelle entfernt werden, um die radiale Stauhöhe anzupassen, bspw. an einen Wellendurchmesser. Hierdurch soll die Teilevielfalt im Getriebebaukasten signifikant reduziert werden.

Die Herstellung des aus diesem Dokument bekannten Ölstauringes ist jedoch vergleichsweise aufwändig.

Ferner ist es bekannt, Ölstauringe aus massivem Stahl oder Aluminium herzustellen. Diese erfordern einen relativ genauen Passsitz. Daher sind zum Einsetzen solcher Ölstauringe zusätzliche Bearbeitungsschritte notwendig, was die Herstellungskosten erhöht.

Fluidstauringe aus Blech können relativ große Toleranzen überbrücken. Derartige Blechringe erfordern jedoch relativ hohe Werkzeugkosten bei einem Lieferanten, da es sich hierbei in der Regel nicht um Normteile handelt.

Ferner sind Fluidstauringe aus Kunststoff bekannt. Bei diesen können Probleme entstehen, wenn die Schaftanordnung mit hohen Temperaturen betrieben wird, bspw. in einem Fahrzeuggetriebe. In diesem Fall kann es passieren, dass die Fluidstauringe aus Kunststoff im Betrieb aus ihrer Position herauswandern.

Vor dem obigen Hintergrund ist es eine Aufgabe der Erfindung, eine verbesserte Schaftanordnung mit einem Fluidstauring anzugeben.

Die obige Aufgabe wird durch eine Schaftanordnung gemäß Anspruch 1 gelöst, wobei der Fluidstauring durch einen Federring gebildet ist, der aus einem Federdraht gewickelt ist.

Durch diese Ausgestaltung des Fluidstauringes kann der Fluidstauring sehr wirtschaftlich herstellbar sein, selbst in kleinen Stückzahlen. Spezielle Werkzeugkosten sind in der Regel nicht erforderlich, da ein solcher Federring auf einer Standard-Drahtbiegemaschine hergestellt werden kann.

Zudem kann der Federdraht genau auf die erforderliche Länge für den Federring abgelängt werden, so dass bei der Herstellung des Fluidstauringes kein Abfall entsteht.

Folglich kann die Schaftanordnung mit geringen Kosten hergestellt werden.

Die obige Aufgabe wird ferner gelöst durch die Verwendung eines Federrings, der aus einem Federdraht gewickelt ist, als Fluidstauring in einer Fluidführungsbohrung, insbesondere in einer Zentralbohrung einer Schaftanordnung der erfindungsgemäßen Art.

Die Schaftanordnung kann generell als Wellenanordnung ausgebildet sein, wobei der Hohlschaft als Hohlwelle ausgebildet ist, an dessen Außenumfang ein Bauteil gelagert ist, wie bspw. ein mittels eines Nadellagers drehbar gelagertes Losrad eines Kraftfahrzeuggetriebes. In diesem Fall beinhaltet die Hohlwelle eine Querbohrung, die die Zentralbohrung mit dem Bauteil verbindet, insbesondere mit dem Lager dieses Bauteils. Über die Zentralbohrung kann folglich Fluid zu dem Lager geführt werden. Der Fluidstauring dient in diesem Fall dazu, ein Rückströmen von Fluid aus der Position der Querbohrung in Richtung hin zu einer Fluidzuführung zu verhindern oder zu verringern.

Generell kann die Schaftanordnung jedoch auch so aufgebaut sein, dass der Hohlschaft als Gehäuse-Hohlschaft ausgebildet ist, in Bezug auf den eine Welle gelagert ist, wobei die Welle sich in die Zentralbohrung des Gehäuse-Hohlschaftes hinein erstreckt und dort mittels eines Drehlagers, bspw. eines Wälzlagers drehbar gelagert ist. In diesem Fall kann der Gehäuse-Hohlschaft gegen die Welle bspw. mittels einer Wellendichtung abgedichtet sein.

In diesem Fall ist der Fluidstauring vorzugsweise auf einer axial der Wellendichtung gegenüberliegenden Seite des Lagers zum Lagern der Welle angeordnet.

Der Fluidstauring kann den Fluidfluss entlang der Zentralbohrung zumindest teilweise begrenzen, vorzugsweise vollständig.

Die Aufgabe wird somit vollkommen gelöst.

Gemäß einer bevorzugten Ausführungsform weist der Federring wenigstens eine erste Windung auf, die einen ersten Windungsdurchmesser aufweist.

Vorzugsweise beträgt die Anzahl der ersten Windungen, die den gleichen ersten Windungsdurchmesser aufweisen, wenigstens zwei, also bspw. 2, 3, 4, 5 oder 6. Die Anzahl der Windungen mit dem gleichen ersten Windungsdurchmesser liegt vorzugsweise in einem Bereich zwischen 2 ≤ n ≤ 7.

Der Federring kann folglich als "einlagiger" Federring ausgebildet sein.

Gemäß einer weiteren bevorzugten Ausführungsform weist der Federring wenigstens eine zweite Windung auf, die einen zweiten Windungsdurchmesser aufweist, der kleiner ist als der erste Windungsdurchmesser.

Vorzugsweise ist die Anzahl der zweiten Windungen mit dem zweiten Windungsdurchmesser wenigstens zwei bspw. 2, 3, 4, 5 oder 6.

In diesem Fall kann der Federring als zweilagiger Federring ausgebildet sein, mit einer Anzahl von Windungen mit dem ersten Windungsdurchmesser und mit einer Anzahl von Windungen mit dem zweiten Windungsdurchmesser, wobei die zweiten Windungen radial innerhalb der ersten Windungen liegen.

Auf diese Weise kann bei einer vorgegebenen Drahtstärke des Federdrahtes die "Stauhöhe" vergleichsweise einfache Weise erhöht werden.

Generell ist es möglich, dass der Federring noch weitere Windungen aufweist, bspw. wenigstens zwei dritte Windungen mit einem dritten Windungsdurchmesser, der kleiner ist als der zweite Windungsdurchmesser, und ggf. weitere vierte Windungen, die jeweils einen vierten Windungsdurchmesser aufweisen, der kleiner ist als der dritte Windungsdurchmesser, usw.

Ferner ist es insgesamt vorteilhaft, wenn der Federring so ausgebildet ist, dass er in einem elastisch komprimierten Zustand einen Außendurchmesser aufweist, der kleiner ist als ein Bohrungsdurchmesser der Zentralbohrung, und/oder der so ausgebildet ist, dass er in einem entspannten Zustand einen Außendurchmesser aufweist, der größer ist als der Bohrungsdurchmesser der Zentralbohrung.

Auf diese Weise ist es möglich, den Federring elastisch zu komprimieren, um diesen auf einfache Weise in die Zentralbohrung einzusetzen. Durch Lösen der Kompression versucht der Federring anschließend wieder in seinen entspannten Zustand zu gelangen, wobei die hierbei ausgeübte Federkraft radial nach außen gegen den Innenumfang des Bohrungsdurchmessers wirkt. Vorzugsweise kann der Fluidstauring ohne weitere Maßnahmen und ohne weitere Befestigungsmittel auf diese Art und Weise in die Zentralbohrung eingesetzt werden.

Es versteht sich, dass der Federdraht vorzugsweise aus einem Federstahl hergestellt ist, der auch bei hohen Temperaturen, wie sie bspw. im Bereich für Kraftfahrzeuggetrieben vorliegen können, keine wesentlichen Änderungen seiner Eigenschaften erfährt. Demzufolge kann die Position des Federringes, der auf die oben genannte Art und Weise in eine Zentralbohrung eingesetzt wird, mit hoher Sicherheit beibehalten werden.

Bei der obigen Ausführungsform ist unter dem Bohrungsdurchmesser der Zentralbohrung jener Durchmesser der Zentralbohrung zu verstehen, an dessen Umfangsabschnitt der Federring angreift. Dies kann ein beliebiger Abschnitt der Zentralbohrung sein, wenn diese einen durchgehend einheitlichen Durchmesser aufweist. Der Bohrungsdurchmesser kann in diesem Fall jedoch auch der Außendurchmesser einer Nut sein, die in der Zentralbohrung ausgebildet ist.

Gemäß einer weiteren bevorzugten Ausführungsform liegt das Verhältnis eines Durchmessers des Federdrahtes zu einem Bohrungsdurchmesser der Zentralbohrung in einem Bereich von 0,01 bis 0,3.

Besonders bevorzugt liegt dieses Verhältnis in einem Bereich von 0,02 bis 0,2. Ferner ist es vorteilhaft, wenn dieses Verhältnis in einem Bereich von 0,02 bis 0,15 liegt. Besonders bevorzugt ist ein Verhältnis in einem Bereich von 0,04 bis 0,1.

Auf diese Weise kann der Federring zum einen eine geeignete radiale Stauhöhe bewirken und zum anderen vergleichsweise gut radial komprimiert werden, um in die Zentralbohrung eingesetzt zu werden.

Ferner ist es vorteilhaft, wenn der Drahtquerschnitt des Federdrahtes rund oder elliptisch oder polygonal ist.

Besonders bevorzugt ist der Drahtquerschnitt rund, kann jedoch auch polygonal sein, insbesondere rechteckig. Bei einem rechteckigen Drahtquerschnitt ist der Federdraht vorzugsweise so gewunden, dass Seitenflächen des Drahtquerschnittes aneinander liegen.

Gemäß einer weiteren insgesamt bevorzugten Ausführungsform ist wenigstens ein Ende des Federdrahtes des Federrings nach innen abgebogen.

Vorzugsweise sind beide Enden des Federdrahtes nach innen abgebogen. Ein derartiges Abbiegen des Endes des Federdrahtes kann ein Komprimieren des Federdrahtes zum Zwecke des Einsetzens in die Zentralbohrung erleichtern, und/oder eine Demontage des Fluidstauringes aus der Zentralbohrung.

Bevorzugt ist der Fluidstauring alleine durch den Federring gebildet, der aus dem Federdraht gewickelt ist, weist also keine weitere Bauelemente auf.

In einer Variante hiervon ist jedoch ein flaches Stauelement zwischen zwei Windungen des Federrings eingesetzt.

Das Stauelement kann ein Blechelement sein, das bspw. in einer axialen Draufsicht eine Kreissegmentform hat. Eine Sehnenlänge einer solchen Kreissegmentform ist vorzugsweise kleiner als ein Bohrungsdurchmesser und ist vorzugsweise kleiner als das 0,8-fache des Bohrungsdurchmessers der Zentralbohrung. Das kreissegmentförmige Stauelement hat vorzugsweise eine Segmenthöhe, die größer ist als ein Durchmesser des Federdrahtes. Vorzugsweise ist die Segmenthöhe kleiner als ein halber Innendurchmesser des Federrings.

Insgesamt ist es ferner vorteilhaft, wenn der Federring in eine Radialnut in der Zentralbohrung eingesetzt ist.

In diesem Fall ist die Tiefe der Radialnut vorzugsweise kleiner als die radiale Dicke des Fluidstauringes (die gebildet sein kann durch einen Drahtdurchmesser oder durch mehrfache Drahtdurchmesser, je nachdem, ob der Federring einlagig oder mehrlagig ausgebildet ist). Ferner ist eine axiale Länge der Radialnut vorzugsweise etwa gleich der axialen Länge des Fluidstauringes.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Schaftanordnung mit Fluidstauringen;
- Fig. 2: eine schematische Längsschnittansicht einer Ausführungsform eines Fluidstauringes für die Schaftanordnung der Fig. 1;
- Fig. 3: eine der Fig. 2 vergleichbare schematische Längsschnittansicht einer weiteren Ausführungsform eines Fluidstauringes für die Schaftanordnung der Fig. 1;
- Fig. 4: eine der Fig. 2 vergleichbare Darstellung einer weiteren Ausführungsform eines Fluidstauringes für die Schaftanordnung der Fig. 1; und
- Fig. 5: eine schematische Axialansicht einer weiteren Ausführungsform eines Fluidstauringes für die Schaftanordnung der Fig. 1.

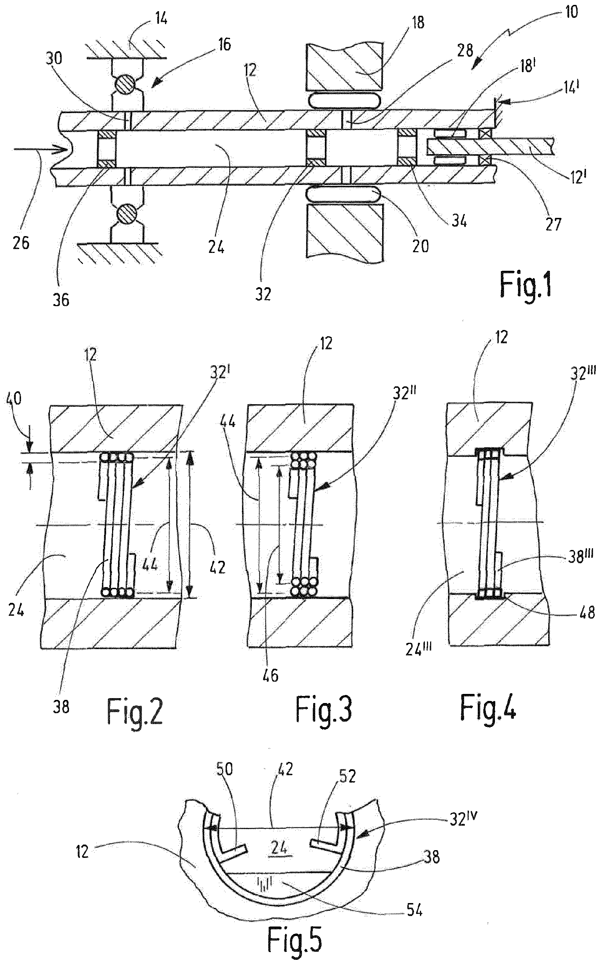

In Fig. 1 ist in schematischer Form eine Schaftanordnung dargestellt und generell mit 10 bezeichnet.

Die Schaftanordnung 10 weist einen Schaft 12 auf, der als Hohlschaft ausgebildet ist. Ferner weist die Schaftanordnung 10 ein Gehäuse 14 auf. Auf der linken Seite in Fig. 1 ist der Schaft 12 als Welle ausgebildet und ist drehbar in Bezug auf das Gehäuse 14 gelagert, und zwar mittels eines Lagers 16, das schematisch als Wälzlager angedeutet ist.

In diesem Fall ist an der Welle 12 ferner ein Bauteil 18 drehbar gelagert. Das Bauteil 18 kann bspw. ein Losrad sein, das mittels eines Nadellagers 20 an einem Außenumfang der Welle 12 drehbar gelagert ist.

Der Schaft 12 ist als Hohlschaft ausgebildet und weist eine sich axial erstreckende Zentralbohrung 24 auf. In die Zentralbohrung 24 kann Fluid zugeführt werden, wie es in Fig. 1 auf der linken Seite bei 26 gezeigt ist.

Auf der rechten Seite von Fig. 1 ist gezeigt, dass der Hohlschaft 12 alternativ mit einem Gehäuse 14' verbunden sein kann. In diesem Fall dient der Gehäuse-Hohlschaft 14' dazu, ein Welle 12 drehbar zu lagern, die sich radial in die Zentralbohrung 24 hinein erstreckt. Die Welle 12' ist gegenüber dem Gehäuse-Hohlschaft 14' durch einen Wellendichtring 27 abgedichtet. Ein Lager 18', das bspw. als Wälzlager ausgebildet sein kann, dient dazu, die Welle 12' in Bezug auf den Gehäuse-Hohlschaft 14' drehbar zu lagern. Der Wellendichtring 27 dient auch zum Abdichten der Zentralbohrung 24, derart, dass in die Zentralbohrung 24 zugeführtes Fluid nicht an dem Wälzlager 18' vorbei aus der Zentralbohrung 24 austreten kann.

Auf der linken Seite der Fig. 1, bei der der Schaft 12 durch eine Welle gebildet ist, sind eine Mehrzahl von Querbohrungen 28 vorgesehen, die axial mit dem Bauteil 18 ausgerichtet sind und die die Zentralbohrung 24 mit dem Bauteil 18 bzw. dessen Lager 20 verbinden. Auf diese Weise kann Fluid, das in die Zentralbohrung 24 zugeführt wird, dem Lager 20 zugeführt werden, um dieses geeignet zu schmieren.

Bei 30 sind weitere Querbohrungen gezeigt, die ggf. dazu dienen, Fluid zu dem Lager 16 zuzuführen.

Im Inneren der Zentralbohrung sind zudem mehrere Fluidstauringe angeordnet. Ein erster Fluidstauring 32 befindet sich in axialer Richtung zwischen den Querbohrungen 28 und der Fluidzufuhr 26. Fluid, das in Richtung der Querbohrungen 28 zugeführt worden ist, wird durch den ersten Fluidstauring 32 daran gehindert, in Richtung der Fluidzufuhr 26 zurückzuströmen, bzw. es wird ein solcher Rückstrom verringert.

Auf der rechten Seite der Fig. 1, bei der der Schaft 12 mit dem Gehäuse 14' verbunden ist, ist ein zweiter Fluidstauring 34 in die Zentralbohrung 24 eingesetzt, wobei der zweite Fluidstauring 34 auf einer axial dem Wellendichtring 27 gegenüberliegenden Seite des Wälzlagers 18' angeordnet ist. Fluid, das über die Fluidzufuhr 26 in die Zentralbohrung 24 zugeführt worden ist und durch den zweiten Fluidstauring 34 in Richtung hin zu dem Wälzlager 18' geführt worden ist, kann folglich nicht oder nur teilweise zurückströmen, so dass eine Schmierung des Wälzlager 18 gewährleistet ist.

In Fig. 1 ist auf der linken Seite bei 36 ein dritter Fluidstauring gezeigt, der ggf. zwischen der Querbohrung 30 und der Fluidzufuhr angeordnet ist, mit einem ähnlichen Zweck wie bei dem ersten Fluidstauring 32.

Fluidstauringe der oben bezeichneten Art können generell durch massive Stahl- oder Aluminiumringe gebildet sein.

Vorliegend sind ist wenigstens einer der Fluidstauringe 32, 34, 36 durch einen Federring gebildet, der aus einem Federdraht gewickelt ist.

In den Figuren 2 bis 5 sind unterschiedliche Ausführungsformen eines derartigen Federringes gezeigt, die sämtlich als Fluidstauring 32, als Fluidstauring 34 und/oder als Fluidstauring 36 verwendbar sind.

Ein erster Fluidstauring 32' ist in Fig. 1 gezeigt. Der Fluidstauring 32' ist aus einem Federdraht 38 gewickelt, der einen Drahtdurchmesser 40 hat. Das Verhältnis des Drahtdurchmessers 40 zu einem Bohrungsdurchmesser 42 der Zentralbohrung 24 liegt in einem Bereich von 0,01 bis 0,3.

Der Federring, der den Fluidstauring 32' bildet und aus dem Federdraht 38 gewickelt ist, ist vorliegend als einlagiger Federring ausgebildet. Der Fluidstauring 32' weist vorliegend vier Windungen auf, die sämtlich den gleichen ersten Windungsdurchmesser 44 besitzen.

Der erste Windungsdurchmesser 44 ist so gewählt, dass der Fluidstauring 32' in einem radial komprimierten Zustand in die Zentralbohrung 24 eingesetzt werden kann. Bei der Entspannung drückt sich der Fluidstauring 32' radial nach außen gegen den Innenumfang der Zentralbohrung 24 und wird hierdurch kraftschlüssig in axialer Richtung in Bezug auf die Zentralbohrung 24 festgelegt.

Die Anzahl der Windungen kann in einem Bereich zwischen 2 und 6 liegen, um ein Beispiel zu nennen.

In Fig. 3 ist eine weitere Ausführungsform eines Fluidstauringes 32" gezeigt, der ebenfalls als Federring ausgebildet ist und aus einem Federdraht gewickelt ist. Der Federdraht kann der gleiche Federdraht 38 sein wie bei der Ausführungsform der Fig. 2.

Der Fluidstauring 32" ist vorliegend zweilagig ausgebildet, mit einer ersten Anzahl von drei Windungen, die den ersten Windungsdurchmesser 44 haben, und einer zweiten Anzahl von vorliegend drei Windungen, die einen zweiten Windungsdurchmesser 46 haben, der kleiner ist als der erste Windungsdurchmesser.

Der Fluidstauring 32" ist vorliegend zweilagig ausgebildet. Der Federring könnte jedoch auch drei-, vier- oder fünflagig ausgebildet sein, um weitere Beispiele zu nennen.

Ansonsten entspricht der Aufbau und die Funktionsweise dem Fluidstauring 32' der Fig. 2.

In Fig. 4 ist eine weitere Ausführungsform eines Federringes gezeigt, der einen Fluidstauring 32'" bildet. Bei dieser Ausführungsform ist der Fluidstauring 32'" aus einem Federdraht 38"' gewickelt, der im Gegensatz zu dem kreisförmigen Federdrahtquerschnitt des Federdrahtes 38 der Fig. 2 und 3 einen polygonalen Querschnitt hat, genauer einen quadratischen Querschnitt.

Ferner ist in Fig. 4 gezeigt, dass in der Zentralbohrung 24'" eine Radialnut ausgebildet sein kann, in die der Fluidstauring 32'" eingesetzt ist. Eine radiale Tiefe der Radialnut 48 ist vorzugsweise kleiner als eine radiale Tiefe bzw. als die radiale Dicke des Fluidstauringes 32"'. Vorliegend ist die radiale Tiefe der Radialnut 48 kleiner als der Durchmesser des Federdrahtes 38"'. Durch die Radialnut kann der Fluidstauring 32'" axial noch sicherer hinsichtlich seiner Position fixiert werden, nämlich axial formschlüssig.

In Fig. 5 ist eine weitere Ausführungsform eines Federringes gezeigt, der als Fluidstauring 32^{IV} ausgebildet ist und aus einem Federdraht 38 gewickelt ist. Der Aufbau und die Funktion entsprechen jener der Fig. 2. Im Folgenden werden die Unterschiede erläutert.

So ist zum einen bei dem Fluidstauring 32^{IV} vorgesehen, dass Enden des Federdrahtes 38, der den Fluidstauring 32^{IV} bildet, radial nach innen abgebogen sind, wie in Fig. 5 bei 50, 52 gezeigt ist.

Durch die abgebogenen Enden 50, 52 kann der Fluidstauring 32^{IV} radial nach innen komprimiert werden, indem man an den Enden 50, 52 angreift. Hierdurch kann das Einsetzen des Fluidstauringes 32^{IV} in die Zentralbohrung 24 und/oder das Demontieren des Fluidstauringes 32^{IV} aus der Zentralbohrung 24 erleichtert werden.

In Fig. 5 ist ferner angedeutet, dass der Fluidstauring 32^{IV} zusätzlich ein Stauelement 54 aufweisen kann, bspw. in Form eines Blechelementes, das in axialer Richtung zwischen zwei Windungen des Fluidstauringes 32^{IV} eingesetzt ist. Ein derartiges Stauelement 54 kann auch bei den Ausführungsformen der Figuren 2 bis 4 verwendet werden, und zwar je nach Bedarf. Durch das Stauelement 54 kann eine radiale Stauhöhe vergrößert werden, ohne dass ein Durchmesser des Federdrahtes 38 vergrößert werden müsste oder dass der Federring mehrlagig ausgebildet werden müsste. Das Stauelement kann insbesondere mit einem ein- oder mit einem zweilagigen Federring verwendet werden. Das Stauelement 54 kann aus einem Metallblech hergestellt sein, kann jedoch auch aus einem Kunststoffelement hergestellt sein. Gegebenenfalls kann das Stauelement 54 an seinem an dem Federdraht angreifenden Abschnitt mit Ringausnehmungen ausgebildet sein, so dass das Stauelement 54 besser zwischen den Windungen des Federrings gehalten werden kann.

Das Stauelement 54 hat vorzugsweise eine Kreissegmentform, deren Sehnenlänge kleiner ist als ein Bohrungsdurchmesser 42. Vorzugsweise hat das Stauelement 54 eine Segmenthöhe, die größer ist als ein Durchmesser des Drahtes 38 und/oder kleiner als ein halber Innendurchmesser des Fluidstauringes 32^{IV}.

Wie erwähnt, können die abgebogenen Enden 50, 52 auch bei den Ausführungsformen der Figuren 2 bis 4 verwendet werden, und das Stauelement 54 kann auch bei den Ausführungsformen der Figuren 2 bis 4 verwendet werden. Die Verwendung der abgebogenen Enden 50, 52 und des Stauelementes 54 ist unabhängig voneinander.

## Patentansprüche

1. Schaftanordnung (10) für ein Kraftfahrzeuggetriebe, mit einem Hohlschaft (12) und mit einem in Bezug auf den Hohlschaft (12) gelagerten Bauteil (18; 18'), wobei der Hohlschaft (12) eine Zentralbohrung (24) aufweist, die dazu ausgebildet ist, ein Fluid aufzunehmen, um dieses dem Bauteil (18) zuzuführen, und wobei in der Zentralbohrung (24) ein Fluidstauring (32) angeordnet ist, der einen Fluidfluss entlang der Zentralbohrung (24) zumindest teilweise begrenzt,
**dadurch gekennzeichnet, dass**
der Fluidstauring (32) durch einen Federring (32'; 32"; 32"'; 32^{IV}) gebildet ist, der aus einem Federdraht (38; 38'") gewickelt ist.

2. Schaftanordnung nach Anspruch 1, **dadurch gekennzeichnet, dass** der Federring (32'; 32"; 32"'; 32^{IV}) wenigstens eine erste Windung aufweist, die einen ersten Windungsdurchmesser (44) aufweist.

3. Schaftanordnung nach Anspruch 2, **dadurch gekennzeichnet, dass** der Federring (32") wenigstens eine zweite Windung aufweist, die einen zweiten Windungsdurchmesser (46) aufweist, der kleiner ist als der erste Windungsdurchmesser (44).

4. Schaftanordnung nach einem der Ansprüche 1 bis 3, **dadurch gekennzeichnet, dass** der Federring (32'; 32"; 32"'; 32^{IV}) so ausgebildet ist, dass er in einem elastisch komprimierten Zustand einen Außendurchmesser aufweist, der kleiner ist als ein Bohrungsdurchmesser (42) der Zentralbohrung (24), und/oder so ausgebildet ist, dass er in einem entspannten Zustand einen Außendurchmesser aufweist, der größer ist als der Bohrungsdurchmesser (42) der Zentralbohrung (24).

5. Schaftanordnung nach einem der Ansprüche 1 bis 4, **dadurch gekennzeichnet, dass** das Verhältnis eines Durchmessers (40) des Federdrahtes (38) zu einem Bohrungsdurchmesser (42) der Zentralbohrung (24) in einem Bereich von 0,01 bis 0,3 liegt.

6. Schaftanordnung nach einem der Ansprüche 1 bis 5, **dadurch gekennzeichnet, dass** ein Drahtquerschnitt des Federdrahtes (38) des Federrings (32'; 32"; 32"'; 32^{IV}) rund oder elliptisch oder polygonal ist.

7. Schaftanordnung nach einem der Ansprüche 1 bis 6, **dadurch gekennzeichnet, dass** wenigstens ein Ende (50, 52) des Federdrahtes (38) des Federrings (32^{IV}) nach innen abgebogen ist.

8. Schaftanordnung nach einem der Ansprüche 1 bis 7, **dadurch gekennzeichnet, dass** ein flaches Stauelement (54) zwischen zwei Windungen des Federrings (32^{IV}) eingesetzt ist.

9. Schaftanordnung nach einem der Ansprüche 1 bis 8, **dadurch gekennzeichnet, dass** der Federring (32"') in eine Radialnut (48) in der Zentralbohrung (24) eingesetzt ist.

10. Verwendung eines Federrings (32), der aus einem Federdraht (38) gewickelt ist, als Fluidstauring in einer Fluidführungsbohrung (24), insbesondere in einer Zentralbohrung (24) einer Schaftanordnung nach einem der Ansprüche 1 bis 9.

## Claims

1. Shaft assembly (10) for a motor vehicle transmission, having a hollow shaft (12) and a component (18; 18^{I}) which is mounted relative to the hollow shaft (12) wherein the hollow shaft (12) has a central bore (24) which is configured for receiving a fluid so as to feed said fluid to the component (18), and wherein a fluid-damming ring (32) which at least partially delimits a fluid flow along the central bore (24) is disposed in the central bore (24),
**characterized in that**
the fluid-damming ring (32) is formed by a spring washer (32^{I}; 32^{II}; 32^{III}; 32^{IV}) which is wound from a spring wire (38; 38^{III}).

2. Shaft assembly according to Claim 1, **characterized in that** the spring washer (32^{I}; 32^{II}; 32^{III}; 32^{IV}) has at least one first coil which has a first coil diameter (44).

3. Shaft assembly according to Claim 2, **characterized in that** the spring washer (32^{II}) has at least one second coil which has a second coil diameter (46) which is smaller than the first coil diameter (44).

4. Shaft assembly according to one of Claims 1 to 3, **characterized in that** the spring washer (32^{I}; 32^{II}; 32^{III}; 32^{IV}) is configured such that said spring washer (32^{I}; 32^{II}; 32^{III}; 32^{IV}) in an elastically compressed state has an external diameter which is smaller than the bore diameter (42) of the central bore (24), and/or is configured such that said spring washer (32^{I}; 32^{II}; 32^{III}; 32^{IV}) in a relaxed state has an external diameter which is larger than the bore diameter (42) of the central bore (24).

5. Shaft assembly according to one of Claims 1 to 4, **characterized in that** the ratio of a diameter (40) of the spring wire (38) to a bore diameter (42) of the central bore (24) is in a range from 0.01 to 0.3.

6. Shaft assembly according to one of Claims 1 to 5, **characterized in that** a wire cross section of the spring wire (38) of the spring washer (32^{I}; 32^{II}; 32^{III}; 32^{IV}) is round or elliptic or polygonal.

7. Shaft assembly according to one of Claims 1 to 6, **characterized in that** at least one end (50, 52) of the spring wire (38) of the spring washer (32^{IV}) is bent inwards.

8. Shaft assembly according to one of Claims 1 to 7, **characterized in that** a flat damming element (54) is inserted between two coils of the spring washer (32^{IV}).

9. Shaft assembly according to one of Claims 1 to 8, **characterized in that** the spring washer (32^{III}) is inserted in a radial groove (48) in the central bore (24).

10. Use of a spring washer (32) which is wound from a spring wire (38) as a fluid-damming ring in a fluid guide bore (24), in particular in a central bore (24) of a shaft assembly according to one of Claims 1 to 9.

## Revendications

1. Système d'arbre (10) pour une boîte de vitesses de véhicule automobile, comprenant un arbre creux (12) et un composant (18 ; 18') supporté par rapport à l'arbre creux (12), l'arbre creux (12) présentant un alésage central (24) qui est réalisé pour recevoir un fluide afin d'acheminer celui-ci au composant (18), et une bague de retenue de fluide (32) étant disposée dans l'alésage central (24), laquelle limite au moins en partie un écoulement de fluide le long de l'alésage central (24),
**caractérisé en ce que**
la bague de retenue de fluide (32) est formée par une bague élastique (32' ; 32" ; 32'" ; 32^{IV}) qui est formée à partir d'un fil métallique élastique enroulé (38 ; 38'").

2. Système d'arbre selon la revendication 1, **caractérisé en ce que** la bague élastique (32' ; 32" ; 32'" ; 32^{IV}) présente au moins un premier enroulement qui présente un premier diamètre d'enroulement (44).

3. Système d'arbre selon la revendication 2, **caractérisé en ce que** la bague élastique (32") présente au moins un deuxième enroulement qui présente un deuxième diamètre d'enroulement (46) qui est inférieur au premier diamètre d'enroulement (44).

4. Système d'arbre selon l'une quelconque des revendications 1 à 3, **caractérisé en ce que** la bague élastique (32' ; 32" ; 32'" ; 32^{IV}) est réalisée de telle sorte qu'elle présente, dans un état comprimé élastiquement, un diamètre extérieur qui est inférieur à un diamètre d'alésage (42) de l'alésage central (24), et/ou est réalisée de telle sorte qu'elle présente, dans un état détendu, un diamètre extérieur qui est supérieur au diamètre d'alésage (42) de l'alésage central (24).

5. Système d'arbre selon l'une quelconque des revendications 1 à 4, **caractérisé en ce que** le rapport d'un diamètre (40) du fil métallique élastique (38) à un diamètre d'alésage (42) de l'alésage central (24) est compris dans une plage de 0,01 à 0,3.

6. Système d'arbre selon l'une quelconque des revendications 1 à 5, **caractérisé en ce qu'**une section transversale de fil du fil métallique élastique (38) de la bague élastique (32' ; 32" ; 32'" ; 32^{IV}) est ronde ou elliptique ou polygonale.

7. Système d'arbre selon l'une quelconque des revendications 1 à 6, **caractérisé en ce qu'**au moins une extrémité (50, 52) du fil métallique élastique (38) de la bague élastique (32^{IV}) est cintrée vers l'intérieur.

8. Système d'arbre selon l'une quelconque des revendications 1 à 7, **caractérisé en ce qu'**un élément de retenue plat (54) est inséré entre deux enroulements de la bague élastique (32^{IV}).

9. Système d'arbre selon l'une quelconque des revendications 1 à 8, **caractérisé en ce que** la bague élastique (32'") est insérée dans une rainure radiale (48) dans l'alésage central (24).

10. Utilisation d'une bague élastique (32) qui est formée à partir d'un fil métallique élastique (38) enroulé, en tant que bague de retenue de fluide dans un alésage de guidage de fluide (24), en particulier dans un alésage central (24) d'un système d'arbre selon l'une quelconque des revendications 1 à 9.
